# EUROPEAN PATENT SPECIFICATION

(11) **EP 3 740 946 B1**
(45) Date of publication and mention of the grant of the patent: **06.08.2025**
(21) Application number: 19743589.4
(22) Date of filing: 23.01.2019
(51) Int. Cl.: G08G 1/00, G06Q 10/06, G06Q 10/0631, G06V 20/20, G06V 20/56, G06V 40/10, G06V 40/70, G06Q 50/40, G06Q 10/02

(54) **PICKUP SERVICE BASED ON RECOGNITION BETWEEN VEHICLE AND PASSENGER**
ABHOLDIENST AUF BASIS DER ERKENNUNG ZWISCHEN FAHRZEUG UND PASSAGIER
SERVICE DE RAMASSAGE BASÉ SUR LA RECONNAISSANCE ENTRE UN VÉHICULE ET UN PASSAGER

(30) Priority: 25.01.2018 US 201815880009
(43) Date of publication of application: 25.11.2020
(60) Divisional application: 25186929.3
(73) Proprietor: HUAWEI TECHNOLOGIES CO., LTD., Shenzhen, Guangdong 518129 (CN)
(72) Inventor: YANG, Lei, Fremont, California 94539 (US); YU, Hai, Shenzhen, Guangdong 518129 (CN); XU, Qijie, Santa Clara, California 95050 (US); PORIKLI, Fatih, San Jose, California 95135 (US)
(74) Representative: Gill Jennings & Every LLP
(86) International application number: PCT/CN2019/072791
(87) International publication number: WO 2019/144876

(56) References cited:
- CN-A- 103 903 428
- CN-A- 104 123 834
- CN-A- 107 016 369
- CN-A- 107 221 151
- US-A1- 2016 161 266
- US-A1- 2017 178 269
- SUNIL KUMAR KOPPARAPU ET AL: "Mobile Phone Based Vehicle License Plate Recognition for Road Policing", 7 April 2015 (2015-04-07), XP055771908, Retrieved from the Internet <URL:https://arxiv.org/pdf/1504.01476.pdf> [retrieved on 20210203]
- KALE A ET AL: "Fusion of gait and face for human identification", ACOUSTICS, SPEECH, AND SIGNAL PROCESSING, 2004. PROCEEDINGS. (ICASSP ' 04). IEEE INTERNATIONAL CONFERENCE ON MONTREAL, QUEBEC, CANADA 17-21 MAY 2004, PISCATAWAY, NJ, USA,IEEE, PISCATAWAY, NJ, USA, vol. 5, 17 May 2004 (2004-05-17), pages 901 - 904, XP010719075, ISBN: 978-0-7803-8484-2, DOI: 10.1109/ICASSP.2004.1327257

## Description

### BACKGROUND

Passengers rely on various passenger pickup services such as, for example, Uber^{®}, Lyft^{®}, Didi, conventional taxi services, and so on, to secure a ride to a desired destination. Unfortunately, it may be difficult for a driver and the passenger to be picked up to identify each other in crowded environments such as, for example, an airport, a railway station, or at the corner of a busy street. Indeed, the driver and the passenger may only know the approximate location of each other based on global positioning system (GPS) coordinates. The GPS coordinates may not be sufficiently precise to permit the driver and passenger to easily locate each other where the environment is crowded, where there is continuously moving traffic, and so on. As such, the driver and passenger may have to visually locate each other once the GPS coordinates indicate that the driver and passenger are within visual distance of each other. To aid in this process, the driver may be provided with some basic information about the passenger such as, for example, the passenger's name and a photograph of the passenger. Similarly, the passenger may be provided with some basic information about the driver and/or vehicle such as, for example, the driver's name, a photograph of the driver, and the make, model, and year of the driver's vehicle. However, if the information is not current (e.g., the photographs are old, there are numerous similar vehicles in the area), then the visual recognition process may be undesirable. Moreover, if the driver is actively searching for the intended passenger while operating a moving vehicle, the driver may be distracted and cause an accident.
In the near future, autonomous vehicles are expected to be a popular mode of travel. Because autonomous vehicles operate without any driver, any pickup service using autonomous vehicles will not be able to rely on human involvement such as the driver visually recognizing the passenger to be picked up. As such, any pickup service using autonomous vehicles cannot rely on traditional methods of identifying a passenger requesting a ride.
US 20160161266A1 discloses a system using vehicle sensors to compare passenger models for identification at pickup locations. US 20170178269A1 discloses a system presenting a unique vehicle identifier for ridesharing services using in-vehicle displays. Sunil Kumar Kopparapu et al., "Mobile Phone Based Vehicle License Plate Recognition for Road Policing", 7 April 2015, XP055771908 discloses a client-server system enabling mobile-based recognition of vehicle license plates for traffic enforcement. Amit Kale, "Fusion of Gait and Face for Human Identification", 17 May 2004, XP010719075 discloses a method combining gait and face recognition using decision fusion for human identification from single-camera video data.

### SUMMARY

The invention is defined by the appended independent claim. In an embodiment not forming part of the claimed invention, the disclosure includes a vehicle including a receiver configured to receive a pickup request from a passenger, the pickup request including an approximate location of the passenger, a camera coupled to the receiver, the camera configured to scan for the passenger after arriving at the approximate location of the passenger, a processor coupled to the camera, the processor configured to identify the passenger based on a comparison between passenger attribute information and results of the scan by the camera, and a transmitter coupled to the processor, the transmitter configured to transmit an approximate location of the vehicle and vehicle identification information to the passenger when the passenger has not been identified, where the passenger is picked up by the vehicle when the passenger has been identified and is accessible for pickup.

In an embodiment not forming part of the claimed invention, the transmitter is configured to transmit a pickup confirmation in response to the pickup request, and to transmit the approximate location of the vehicle and the vehicle identification information to the passenger when the passenger has been identified but is not accessible for pickup. In an embodiment not forming part of the claimed invention, the camera comprises a monocular camera system or a stereo camera system. In an embodiment not forming part of the claimed invention, the approximate location of the passenger and the approximate location of the vehicle each comprise one of global positioning system (GPS) coordinates, BeiDou Navigation Satellite System (BDS) coordinates, cellular triangulation information, or wireless fidelity (WiFi) information. In an embodiment not forming part of the claimed invention, the passenger attribute information is obtained from a memory of the vehicle, the memory coupled to the processor. In an embodiment not forming part of the claimed invention, the pickup request and the passenger attribute information are received from an application server associated with an application on an electronic device of the passenger. In an embodiment not forming part of the claimed invention, the passenger attribute information contains coarse information comprising at least one of an age, gender, race, and height of the passenger, a photograph of the passenger taken at a time of the pickup request, a current hairstyle, a current hair color, or a clothing description of the passenger at the time of the pickup request. In an embodiment not forming part of the claimed invention, the passenger attribute information contains fine information comprising a three dimensional (3D) model based upon at least one of a face, a body, or a gait of the passenger, and wherein the fine information is utilized only when the coarse information failed to identify the passenger. In an embodiment not forming part of the claimed invention, the passenger attribute information comprises at least one of an image containing a face of the passenger, a photograph of the passenger taken on the day of the pickup request, a video of the passenger, or a portrait of the passenger. In an embodiment not forming part of the claimed invention, the vehicle identification information comprises at least one of a three dimensional (3D) model of the vehicle, a bar code on an exterior of the vehicle, a license plate number of the vehicle, a color pattern on the exterior of the vehicle, or a light-emitting diode (LED) strip on the exterior of the vehicle. In an embodiment, the vehicle identification information is configured to be scanned by a camera of an electronic device of the passenger to identify the vehicle for the passenger. In an embodiment not forming part of the claimed invention, the camera and the processor are coupled to a display, the display configured to display images of individuals that may be the passenger who initiated the pickup request to a driver of the vehicle. In an embodiment not forming part of the claimed invention, the vehicle is an autonomous vehicle.

In an embodiment not forming part of the claimed invention, the disclosure includes an electronic device of a passenger including a transmitter configured to transmit a pickup request to a vehicle, the pickup request including an approximate location of the passenger, a receiver coupled to the transmitter, the receiver configured to receive an approximate location of the vehicle and vehicle identification information, a camera coupled to the receiver, the camera configured to scan for the vehicle using the vehicle identification information in response to receiving an indication that the passenger has not been identified by the vehicle and the passenger has been identified by the vehicle but is not accessible for pickup, a processor coupled to the camera, the processor configured to identify the vehicle based on results of the scan by the camera, and a display coupled to the processor, the display configured to display the vehicle identified for the passenger.

In an embodiment not forming part of the claimed invention, the pickup request is transmitted to the vehicle through an application server associated with an application on the electronic device of the passenger. In an embodiment not forming part of the claimed invention, the transmitter is configured to transmit passenger attribute information to the vehicle along with the pickup request. In an embodiment not forming part of the claimed invention, the transmitter is configured to transmit passenger attribute information to an application server in communication with the vehicle. In an embodiment not forming part of the claimed invention, the approximate location of the vehicle comprises at least one of global positioning system (GPS) coordinates, BeiDou Navigation Satellite System (BDS) coordinates, cellular triangulation information, or wireless fidelity (WiFi) information.

In the embodiment, the disclosure includes a method of implementing a pickup service by a vehicle including receiving a pickup request from a passenger, the pickup request including an approximate location of the passenger, scanning, with a camera, for the passenger after arriving at the approximate location of the passenger, picking up the passenger when the passenger has been identified by the camera using coarse passenger attribute information and is accessible for pickup, picking up the passenger when the passenger has been identified by the camera using fine passenger attribute information, the passenger is accessible for pickup, and the coarse passenger attribute information failed to identify the passenger, and transmitting an approximate location of the vehicle and vehicle identification information to the passenger when the passenger has not been identified by the camera using the fine passenger attribute information and when the passenger has been identified but is not accessible for pickup.

In the embodiment, the coarse passenger attribute information comprises at least one of an age, gender, race, and height of the passenger, a photograph of the passenger taken at a time of the pickup request, a current hairstyle, a current hair color, or a clothing description of the passenger at the time of the pickup request, and wherein the fine passenger attribute information comprises a three dimensional (3D) model based upon at least one of a face, a body, and a gait of the passenger.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
FIG. 1 is a schematic diagram of a passenger pickup service capable of implementing bi-directional recognition.
FIG. 2 illustrates an embodiment of a first stage of the passenger pickup service.
FIGS. 3A-3B collectively illustrate an embodiment of a second stage of the passenger pickup service.
FIG. 4 illustrates an embodiment of a passenger implementing a portion of the passenger pickup service to locate a vehicle using an electronic device.
FIG. 5 is a schematic diagram of a passenger pickup device.
FIG. 6 is a flowchart illustrating an embodiment of a method of implementing the passenger pickup service by a vehicle.

### DETAILED DESCRIPTION

It should be understood at the outset that although an illustrative implementation of one or more embodiments are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claim.

Disclosed herein is a passenger pickup service that allows for bi-directional recognition. As will be more fully explained below, the vehicle is able to identify the passenger and the passenger is able to identify the vehicle, even in crowded environments. The passenger pickup service is suitable for use by private vehicles, corporate vehicles, public transportation vehicles, shared vehicles (e.g., a company car), taxi services, and autonomous vehicles (e.g., vehicles without a human driver). In an embodiment, the passenger pickup service is implemented in two stages known as a knowledge base building stage and a recognition stage where the bi-directional recognition is performed.

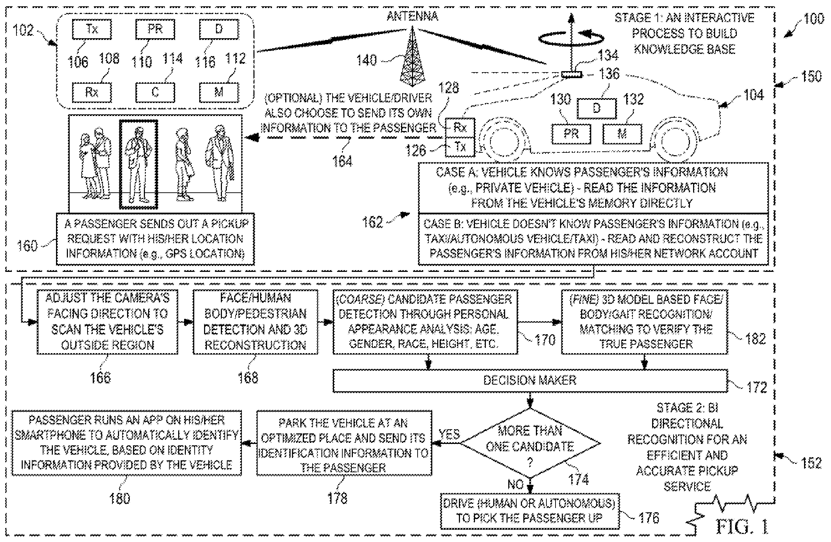

FIG. 1 is a schematic diagram of a passenger pickup service 100 capable of implementing bi-directional recognition. The passenger pickup service 100 comprises an electronic device 102 of a passenger and a vehicle 104. The electronic device 102 may be, for example, a smart phone, smart watch, tablet, smart glasses, wearable electronics, head-up displays, or other handheld or portable electronic device. In an embodiment, the electronic device 102 includes a transmitter 106, a receiver 108, a processor 110, a memory 112, a camera 114, and a display 116. In practical applications, the electronic device 102 may include other components and features such as, for example, a microphone, a speaker, a keyboard, sensors, a power port, an antenna, a flash, etc., that have not been illustrated or described in detail herein. The electronic device 102 may be configured to download and run a variety of different mobile applications.

The vehicle 104 may be a car, truck, van, motorcycle, boat, or other apparatus suitable for transporting a passenger. In particular, the vehicle 104 may be, for example, a shared car, a taxi from a taxi service, or an autonomous vehicle. In an embodiment, the vehicle 104 includes a transmitter 126, a receiver 128, a processor 130, a memory 132, a camera 134, and a display 136. In practical applications, the vehicle 104 may include other components and features that have not been illustrated or described in detail herein.

The electronic device 102 and the vehicle 104 are configured to communicate with each other. By way of example, the electronic device 102 and the vehicle 104 may exchange data and information through a cellular network, a wireless network, or other type of communication system as collectively represented by antenna 140.

Still referring to FIG. 1, the passenger pickup service 100 is illustrated in stages. The first stage 150 comprises an interactive process to build a knowledge base. The second stage 152 comprises a bi-directional recognition for an efficient and accurate pickup service.

In the embodiment of the first stage 150, the passenger sends out a pickup request 160 to the vehicle 104 using the electronic device 102. In an embodiment, the pickup request 160 is transmitted from the electronic device 102 to the vehicle 104 through the antenna 140. The pickup request 160 includes an approximate location of the passenger. The approximate location of the passenger may comprise, for example, global positioning system (GPS) coordinates, BeiDou Navigation Satellite System (BDS) coordinates, cellular triangulation information, and wireless fidelity (WiFi) information. Those skilled in the art will appreciate that other types of technology may also be used to generate the approximate location of the passenger.

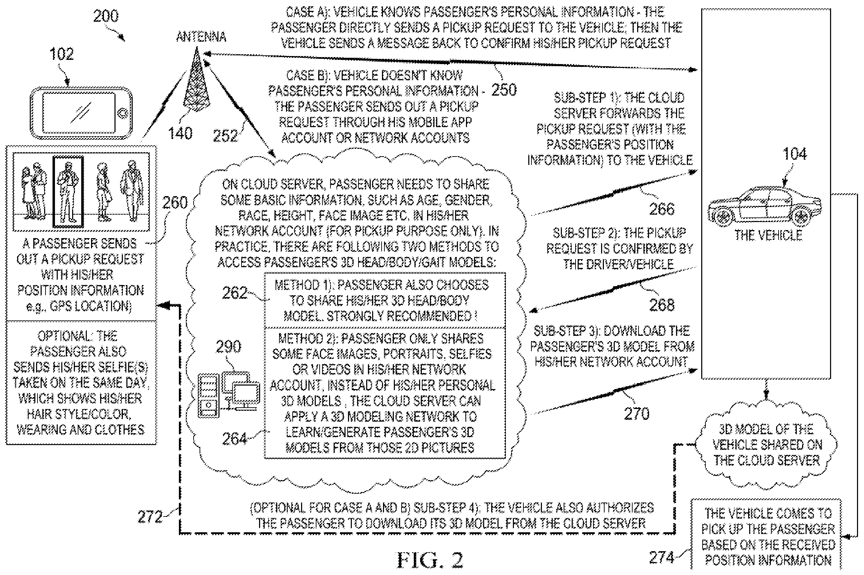

Once the pickup request 160 has been received, the vehicle 104 obtains passenger attribute information 162. The passenger attribute information may be obtained by the vehicle 104 in a variety of different ways and from a variety of different places. For example, the vehicle 104 may read the passenger attribute information from the memory 132 of the vehicle 104 when the vehicle 104 is trusted, as in the case of a private car. In other cases, the vehicle 104 may obtain the passenger attribute information from a network account, a third-party cloud server 290 (see FIG. 2), an application associated with an application on the electronic device 102 of the passenger, and so on, when the vehicle 104 is a public vehicle (e.g., a taxi) or an autonomous vehicle.

In the embodiment, the passenger attribute information contains "coarse" information. In an embodiment, the coarse passenger attribute information is information that can be observed or is publicly available. Examples of coarse passenger attribute information include an age, gender, race, and height of the passenger, a photograph of the passenger taken at a time of the pickup request, a current hairstyle, a current hair color, and a clothing description of the passenger at the time of the pickup request. In an embodiment, the coarse passenger attribute information does not involve passenger privacy. As such, the coarse passenger attribute information may be stored by the vehicle 104 or stored in a passenger's network account.

In the embodiment, the passenger attribute information contains "fine" information. In an embodiment, the fine passenger attribute information involves or implicates passenger privacy. Indeed, the fine passenger attribute information may include information sensitive to the passenger and/or that the passenger would not want to be freely disclosed. Examples of fine passenger attribute information include a three dimensional (3D) model based upon at least one of a face, a body, and a gait of the passenger. In an embodiment, the 3D model is generated by the electronic device 102 of the passenger at the request of, and with information provided by, the passenger. The 3D model can also be generated beforehand in other ways by, for example, a 3D camera or a plurality of 2D cameras. As such, in an embodiment the fine passenger attribute information must be authorized by the passenger before being accessed by the vehicle 104 or others.

In an embodiment, the vehicle 104, or its driver if there is one, may provide vehicle information 164 to the electronic device 102 of the passenger after the pickup request has been received. In an embodiment, the vehicle information comprises an approximate location of the vehicle 104. The approximate location of the vehicle 104 may be obtained using GPS coordinates, BDS coordinates, cellular triangulation information, and WiFi information. One or both of the approximate location of the passenger and the approximate location of the vehicle 104 may be dynamic, updated in real time, and displayed on a map as a reference for the passenger and/or driver of the vehicle 104.

The vehicle information (a.k.a., vehicle identification information) may include, for example, a 3D model of the vehicle 104, a bar code on an exterior of the vehicle 104, a license plate number of the vehicle 104, a color pattern on the exterior of the vehicle 104, a light-emitting diode (LED) strip on the exterior of the vehicle 104, and so on. In an embodiment, the vehicle identification information is configured to be scanned by the camera 114 of the electronic device 102 of the passenger to identify the vehicle 104 for the passenger.

Once the vehicle 104 has obtained the passenger attribute information 162, the vehicle 104 proceeds to the approximate location of the passenger and the second stage 152 is entered. In an embodiment, the vehicle 104 is at the approximate location of the passenger when the passenger is within a range of the camera 134 of the vehicle 104. In an embodiment, the vehicle 104 is at the approximate location of the passenger when a current location of the passenger is within a visual distance of the driver of the vehicle 104.

In the second stage 152, the camera 134 of the vehicle 104 is adjusted 166 to scan the region outside the vehicle 104. In an embodiment, the camera 134 may be adjusted 166 upwardly, downwardly, and/or rotated. In an embodiment, the camera 134 is able to scan three hundred and sixty degrees (360°) around the vehicle 104. The camera 134 of the vehicle 104 attempts to detect the passenger 168. In some embodiments, the camera 134 may be activated to scan the region on arrival of the approximate location of the passenger. The camera 134 may be directed towards the current location (e.g. as indicated in a dynamically updated location message sent from a device with the passenger). In an embodiment, the camera 134 is able to detect the face, human body, or other aspect of a pedestrian. In an embodiment, the camera 134 collects information that will be later used by the vehicle 104 to generate a 3D model of the passenger. In an embodiment, the camera 134 comprises a monocular camera system or a stereo camera system.

Still referring to FIG. 1, an attempt to detect the passenger using coarse passenger attribute information 170 is made. The decision maker 172, which may be the processor 130 of the vehicle 104 and/or the driver of the vehicle 104, determines whether results of the scan have detected more than one passenger candidate 174. If not, the vehicle 104 proceeds to the passenger that was identified for pickup 176. If so, the vehicle parks 178 at an optimized place (e.g. a secure and currently available parking area) and sends the vehicle identification information to the passenger. Once the vehicle identification information has been received, the passenger uses an application 180 on the electronic device 102 to automatically identify the vehicle 104 using the vehicle identification information. In an embodiment, the application uses the camera 114 of the electronic device 102 to scan for and/or locate the vehicle 104 using the vehicle identification information. When the application locates the vehicle 104, the passenger may proceed to the location of the parked vehicle 104 for pickup.

If the attempt to detect the passenger using coarse passenger attribute information 170 was unsuccessful, an attempt to detect the passenger using fine passenger attribute information 182 is made As before, the decision maker 172, which may be the processor 130 of the vehicle 104 and/or the driver of the vehicle 104, determines whether results of the scan have detected more than one passenger candidate 174. If not, the vehicle 104 proceeds to the passenger that was identified for pickup 176. If so, the vehicle parks 178 at an optimized place and sends the vehicle identification information to the passenger. Once the vehicle identification information has been received, the passenger uses an application 180 on the electronic device 102 to automatically identify the vehicle 104 using the vehicle identification information. In an embodiment, the application uses the camera 114 of the electronic device 102 to scan for and/or locate the vehicle using the vehicle identification information. When the application locates the vehicle 104, the passenger may proceed to the location of the parked vehicle 104 for pickup.

FIG. 2 illustrates another embodiment of the first stage 200 of the passenger pickup service 100 of FIG. 1. As shown, the passenger sends out a pickup request 260 to the vehicle 104 using the electronic device 102. In an embodiment, the pickup request includes indications of an approximate location of the passenger. In an embodiment, the pickup request includes the passenger attribute information such as an image containing a face of the passenger, a photograph of the passenger taken on the day of the pickup request, a video of the passenger, a portrait of the passenger, and so on. The pickup request may be transmitted from the electronic device 102 to the vehicle 104 by way of the antenna 140.

In an embodiment, the passenger pickup request may be sent directly from the electronic device 102 of the passenger to the vehicle 104 without going through, for example, the third-party cloud server 290. The passenger attribute information 250 may be readily available to the vehicle 104 (e.g., is able to obtain the passenger attribute information from the memory 132 of the vehicle 104). As used herein, the third-party cloud server 290 may represent an application server, a network server, and so on.

In an embodiment, the application may transmit the passenger attribute information from the electronic device 102 to the third-party cloud server 290, which in turn transmits the passenger attribute information to the vehicle 104. The passenger attribute information 250 may be available to the vehicle 104 (e.g., is able to obtain the passenger attribute information from the memory 132 of the vehicle 104). In an embodiment, the passenger device 102 may transmit the coarse passenger attribute information to the third-party cloud server 290. In some circumstances, the coarse passenger attribute information is sent simultaneously with or at the same time as the pickup request. In other circumstances, the coarse passenger attribute information may have been provided to the third-party cloud server when the passenger set up their account with the third-party cloud server 290 using the application.

In an embodiment, the passenger may also share fine passenger attribute information 262 (e.g., the 3D model information) with the vehicle 104 at or around the time the pickup request is sent 260. The fine passenger attribute information may help the vehicle 104 identify the passenger easily or more quickly. In some embodiments, the vehicle 104 may identify the passenger efficiently and accurately leveraging both the coarse information and fine information of the passenger. For example, the vehicle 104 may perform identification operations to compare coarse information of the passenger with scan results (e.g. images or 2D frames) of camera 134 to narrow or filter unlikely targets (or objects) detected. Subsequently, the vehicle 104 can perform more detailed identification operations based on the fine information to identify the passenger from the filtered scanned results. Identification operations based on the coarse information may be performed more efficiently than identification operations based on the fine information. Identification results based on the fine information may be more accurate than identification results based on the fine information. Therefore, the application running on the electronic device 102 may strongly recommended sharing this information with the vehicle 104.

If the passenger chooses not to share fine passenger attribute information with the vehicle 104, the third-party cloud server 290 may generate or obtain the fine passenger attribute information 264 using the coarse passenger attribute information. For example, the third-party cloud server 290 may use modeling software to generate 3D model information corresponding to the passenger using the available two-dimensional (2D) passenger information (e.g., face images, portraits, photographs, videos, etc.). In an embodiment, the third-party cloud server 290 obtains the 3D model information from a source other than the passenger after providing the source with the 2D model information.

Still referring to FIG. 2, in an embodiment the third-party cloud server 290 forwards the passenger pickup request 266 with the approximate location of the passenger to the vehicle 104. The passenger pickup request 266 is confirmed by the vehicle 268 or the driver of the vehicle 104. The confirmation may be sent to the third-party cloud server 290, which in turn sends the confirmation to the electronic device 102 of the passenger. The vehicle 104 then obtains or downloads 270 the fine passenger attribute information (e.g., the 3D model) from the third-party cloud server 290.

In an embodiment, the vehicle 104 sends/shares 272 vehicle attribute information (e.g., a 3D model of the vehicle) to/in the third-party cloud server 290. In an embodiment, instead of transmitting the vehicle attribute information to the third-party cloud server 290, the vehicle 104 may authorize the electronic device 102 to download the vehicle attribute information from the third-party cloud server 290. This vehicle attribute information may then be sent 272 by the third-party cloud server 290 to the electronic device 102 of the passenger. In an embodiment, the vehicle 104 may also directly send the vehicle attribute information to the electronic device 102 via a wireless network or an antenna 140 without using a third-party cloud server 290.

Once the vehicle 104 has received the approximate location of the passenger, the vehicle 104 proceeds to that location 274. After arriving at the approximate location of the passenger, the vehicle 104 attempts to locate the passenger as explained herein.

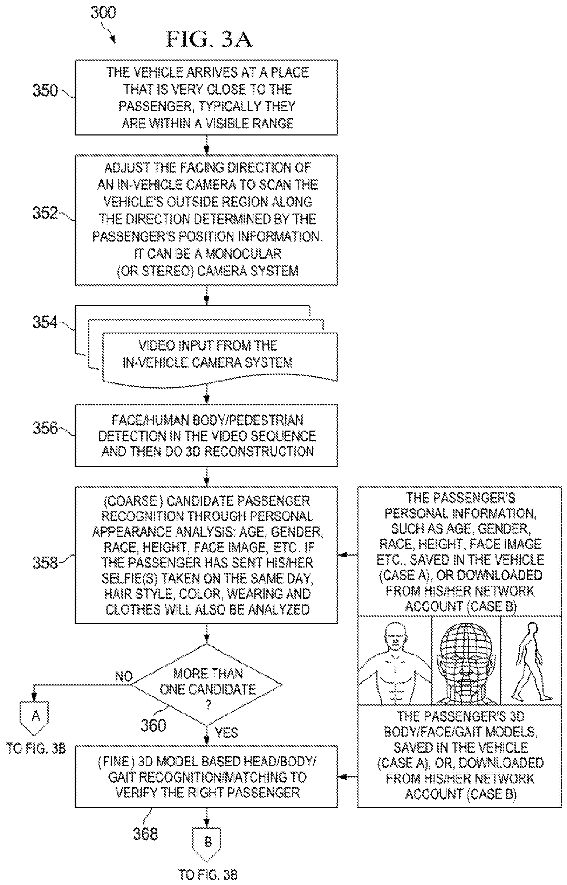

FIGS. 3A-3B collectively illustrate another embodiment of the second stage 300 of the pickup service 100 of FIG. 1. As shown, the vehicle 104 arrives at the approximate location 350 of the passenger. In an embodiment, this may be within the range of the camera 134 of the vehicle 104 or within a visible range of the driver of the vehicle 104.

Once the vehicle 104 is at the approximate location of the passenger, the camera 134 of the vehicle 104 is adjusted 352 to scan the region outside the vehicle 104. In an embodiment, the camera 134 may be part of a monocular camera system or a stereo camera system (e.g., more than one camera is used). Video input 354 from the in-vehicle and/or on-board camera 134 is obtained. That is, the results of the scan are obtained by the vehicle 104. In an embodiment, the processor 130 of the vehicle 104 performs face, human body, and/or pedestrian detection in the video sequence 356 and then generates a 3D reconstruction of the passenger.

The camera 134 of the vehicle 104 attempts to detect and/or recognize the passenger 358 using coarse passenger information as described herein. In an embodiment, the vehicle 104 determines whether the passenger has been identified by comparing the coarse passenger attribute information to results of the scan by the camera 134. The comparison may yield a single passenger candidate or more than one potential passenger candidate 360. If there is not more than one candidate located based on the comparison, the vehicle 104 makes a determination 362 whether the passenger is accessible for pickup. If so, the vehicle 104 picks up the passenger 364.

In an embodiment, the passenger attribute information is mandatorily deleted from the memory 132 of the vehicle 104 and/or the vehicle attribute information is mandatorily deleted 366 from the memory 112 of the electronic device 102 after pickup of the passenger occurs or after the passenger has been delivered to their destination.

If more than one potential passenger candidate 360 is revealed, the results of the scan by the camera 134 may be compared to the fine passenger attribute information 368. The comparison may yield a single passenger candidate or more than one potential passenger candidate 370. If there is not more than one candidate located based on the comparison, the vehicle 104 makes a determination 362 whether the passenger is accessible for pickup. If so, the vehicle 104 picks up the passenger 364. As before, in an embodiment information may be mandatorily deleted 366 in some circumstances.

If more than one potential passenger candidate 370 is revealed, a determination 372 as to whether the vehicle 104 is autonomous is made. If not, in an embodiment photographs of the passenger may be displayed 374 for the driver of the vehicle 104. If the driver of the vehicle 104 is able to recognize the passenger from the photographs and the passenger is accessible for pickup based on the determination 362, the vehicle 104 picks up the passenger 364. As before, in an embodiment information may be mandatorily deleted 366 thereafter.

If the determination 372 revealed that the vehicle 104 was autonomous or if the determination 362 revealed that the passenger was not available for pickup (e.g., the road was blocked, the passenger was in a secure area not permitting vehicles, etc.), the vehicle 104 may be parked at a convenient or optimized location 376. Once parked, the vehicle 104 transmits vehicle attribute information to the electronic device 102 of the passenger. The electronic device 102 of the passenger uses the vehicle attribute information received to identify the vehicle 104. In an embodiment, the electronic device 102 uses an application running or launched on the electronic device 102. In an embodiment, the electronic device 102 uses a 3D model of the vehicle to locate the appropriate vehicle. Once the correct vehicle 104 is located, the passenger can make their way to the vehicle 104 for pickup. As before, in an embodiment information may be mandatorily deleted 366 thereafter.

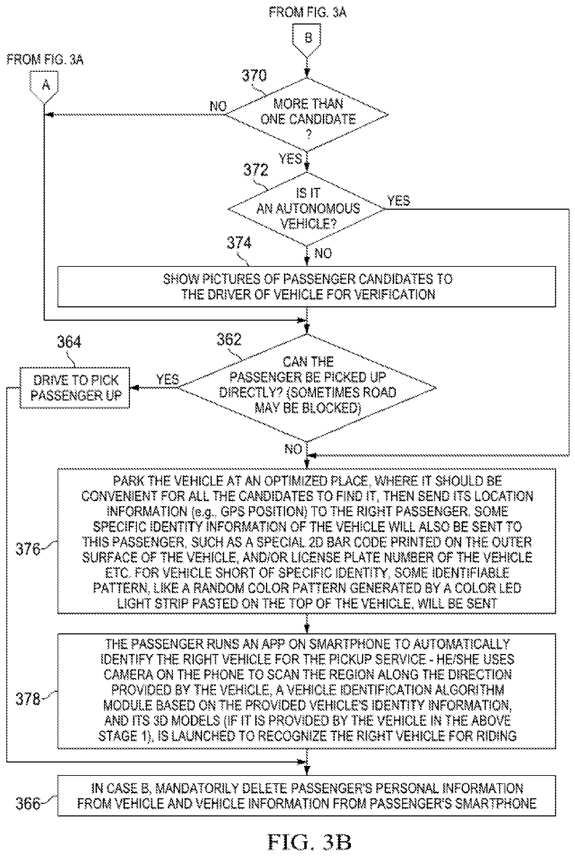

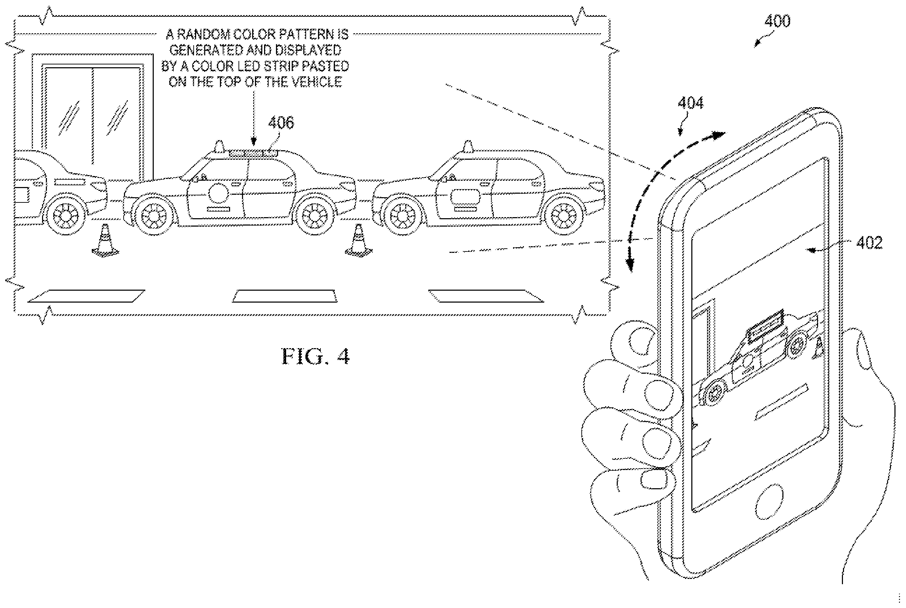

FIG. 4 illustrates an embodiment not forming part of the claimed invention of a passenger implementing a portion 400 of the passenger pickup service 100 of FIG. 1 to locate a vehicle using an electronic device 102. As shown, the portion 400 may be implemented when, for example, the passenger runs the application 402 for the pickup service on the electronic device 102. The application 402 being run in FIG. 4 may be the same or similar to the application being run 378 in FIG 3B. Using the application and the camera 114 of the electronic device 102, the passenger scans the area 404 along the direction determined by the vehicle location (e.g., the GPS coordinates of the vehicle). The vehicle location may be provided by the vehicle 104 to the electronic device 102 as described herein.

The camera 114 of the electronic device 102 is configured to scan for the vehicle 104 using some type of vehicle identification information. For example, the camera 114 of the electronic device 102 may attempt to identify the vehicle 104 by searching for a random color pattern displayed by a color LED display 406 on the vehicle 104. Those skilled in the art will appreciate that the vehicle 104 may be uniquely identified in a variety of different ways as described herein. Once the correct vehicle 104 is located, the passenger can make their way to the vehicle 104 for pickup.

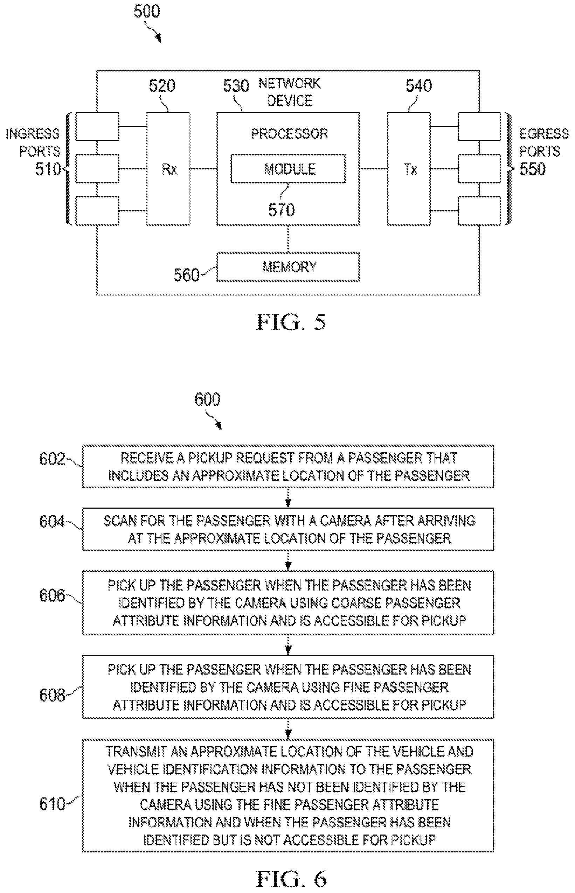

FIG. 5 is a schematic diagram of a passenger pickup device 500 according to an embodiment of the disclosure. The passenger pickup device 500 is suitable for implementing the disclosed embodiments as described herein. For example, the passenger pickup device 500 may be the electronic device 102 or a component of the vehicle 104. The passenger pickup device 500 comprises ingress ports 510 and receiver units (Rx) 520 for receiving data; a processor, logic unit, or central processing unit (CPU) 530 to process the data; transmitter units (Tx) 540 and egress ports 550 for transmitting the data; and a memory 560 for storing the data. The passenger pickup device 500 may also comprise optical-to-electrical (OE) components and electrical-to-optical (EO) components coupled to the ingress ports 510, the receiver units 520, the transmitter units 540, and the egress ports 550 for egress or ingress of optical or electrical signals.

The processor 530 is implemented by hardware and software. The processor 530 may be implemented as one or more CPU chips, cores (e.g., as a multi-core processor), one or more graphics processing units (GPU), field-programmable gate arrays (FPGAs), application specific integrated circuits (ASICs), and digital signal processors (DSPs). The processor 530 is in communication with the ingress ports 510, receiver units 520, transmitter units 540, egress ports 550, and memory 560. The processor 530 comprises a passenger pickup module 570. The passenger pickup module 570 implements the disclosed embodiments described above. For instance, the passenger pickup module 570 implements, processes, prepares, or provides the various functions of the electronic device 102 and/or vehicle 104. The inclusion of the passenger pickup module 570 therefore provides a substantial improvement to the functionality of the passenger pickup device 500 and effects a transformation of the passenger pickup device 500 to a different state. Alternatively, the passenger pickup module 570 is implemented as instructions stored in the memory 560 and executed by the processor 530.

The memory 560 comprises one or more disks, tape drives, and solid-state drives and may be used as an over-flow data storage device, to store programs when such programs are selected for execution, and to store instructions and data that are read during program execution. The memory 560 may be volatile and/or non-volatile and may be read-only memory (ROM), random access memory (RAM), ternary content-addressable memory (TCAM), and/or static random-access memory (SRAM).

FIG. 6 illustrates the embodiment of a method 600 of implementing the passenger pickup service 100 by a vehicle 104. In an embodiment, the method 600 may be executed when a passenger desires to be picked up and has initiated a pickup request. In block 602, a pickup request is received from a passenger. In an embodiment, the pickup request includes an approximate location of the passenger.

In block 604, the camera 134 of the vehicle 104 scans for the passenger after arriving at the approximate location of the passenger. In block 606, the passenger is picked up when the passenger has been identified by the camera 134 using coarse passenger attribute information and is accessible for pickup. In block 608, the passenger is picked up when the passenger has been identified by the camera 134 using fine passenger attribute information, the passenger is accessible for pickup, and the coarse passenger attribute information failed to identify the passenger.

In block 610, an approximate location of the vehicle 104 and vehicle identification information are transmitted to the passenger when the passenger has not been identified by the camera 134 using the fine passenger attribute information and when the passenger has been identified but is not accessible for pickup.

The passenger pickup system and method disclosed herein achieve a highly successful and efficient connection between a vehicle and a future passenger using identity information of the future passenger and/or the location information of the passenger and vehicle.

A vehicle including receiving means configured to receive a pickup request from a passenger, the pickup request including an approximate location of the passenger, camera means coupled to the receiving means, the camera means configured to scan for the passenger after arriving at the approximate location of the passenger, processing means coupled to the camera means, the processing means configured to determine whether the passenger has been identified by comparing passenger attribute information to results of the scan by the camera means, and transmission means coupled to the processing means, the transmission means configured to transmit an approximate location of the vehicle and vehicle identification information to the passenger when the passenger has not been identified, where the passenger is picked up by the vehicle when the passenger has been identified and is accessible for pickup.

An electronic device of a passenger including a transmission means configured to transmit a pickup request to a vehicle, the pickup request including an approximate location of the passenger, a receiving means coupled to the transmission means, the receiving means configured to receive an approximate location of the vehicle and vehicle identification information when the passenger has not been located by the vehicle and when the passenger has been located by the vehicle but is not accessible for pickup, a camera means coupled to the receiving means, the camera means configured to scan for the vehicle using the vehicle identification information when the passenger has not been identified by the vehicle and when the passenger has been identified by the vehicle but is not accessible for pickup, a processor means coupled to the camera means, the processing means configured to identify the vehicle that received the pickup request for the passenger based on results of the scan by the camera means, and a display means coupled to the processing means, the display means configured to display the vehicle identified for the passenger.

While several embodiments have been provided in the present disclosure, it should be understood that the disclosed systems and methods might be embodied in many other specific forms without departing from the scope of the attached claim. The present examples are to be considered as illustrative and not restrictive, and the intention is not to be limited to the details given herein. For example, the various elements or components may be combined or integrated in another system or certain features may be omitted, or not implemented.

A method of implementing a pickup service by a vehicle including receiving a pickup request from a passenger, the pickup request including an approximate location of the passenger, scanning, with a camera means, for the passenger after arriving at the approximate location of the passenger, picking up the passenger when the passenger has been identified by the camera means using coarse passenger attribute information and is accessible for pickup, picking up the passenger when the passenger has been identified by the camera means using fine passenger attribute information, the passenger is accessible for pickup, and the coarse passenger attribute information failed to identify the passenger, and transmitting an approximate location of the vehicle and vehicle identification information to the passenger when the passenger has not been identified by the camera means using the fine passenger attribute information and when the passenger has been identified but is not accessible for pickup.

In addition, techniques, systems, subsystems, and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art.

## Claims

1. A method of implementing a pickup service by a vehicle, comprising:
receiving a pickup request from a passenger, the pickup request including an approximate location of the passenger;
scanning, with a camera, for the passenger after arriving at the approximate location of the passenger;
picking up the passenger when the passenger has been identified by the camera using coarse passenger attribute information and is accessible for pickup;
picking up the passenger when the passenger has been identified by the camera using fine passenger attribute information, the passenger is accessible for pickup, and the coarse passenger attribute information failed to identify the passenger; and
transmitting an approximate location of the vehicle and vehicle identification information to the passenger when the passenger has not been identified by the camera using the fine passenger attribute information and when the passenger has been identified but is not accessible for pickup;
wherein the coarse passenger attribute information comprises at least one of an age, gender, race, and height of the passenger, a photograph of the passenger taken at a time of the pickup request, a current hairstyle, a current hair color, or a clothing description of the passenger at the time of the pickup request, and wherein the fine passenger attribute information comprises a three dimensional (3D) model based upon at least one of a face, a body, and a gait of the passenger.

## Patentansprüche

1. Verfahren zum Umsetzen eines Abholdienstes durch ein Fahrzeug, umfassend:
Empfangen einer Abholanfrage von einem Fahrgast, wobei die Abholanfrage einen ungefähren Standort des Fahrgasts beinhaltet;
Scannen des Fahrgasts mit einer Kamera nach Ankommen an dem ungefähren Standort des Fahrgasts;
Abholen des Fahrgasts, wenn der Fahrgast unter Verwendung von groben Fahrgastattributinformationen durch die Kamera identifiziert wurde und für die Abholung bereitsteht;
Abholen des Fahrgasts, wenn der Fahrgast unter Verwendung von genauen Fahrgastattributinformationen durch die Kamera identifiziert wurde, der Fahrgast für die Abholung bereitsteht und die groben Fahrgastattributinformationen den Fahrgast nicht identifizieren konnten; und
Übermitteln von einem ungefähren Standort des Fahrzeugs und von Fahrzeugidentifikationsinformationen an den Fahrgast, wenn der Fahrgast unter Verwendung der genauen Fahrgastattributinformationen nicht durch die Kamera identifiziert wurde und wenn der Fahrgast identifiziert wurde, aber nicht zur Abholung bereitsteht;
wobei die groben Fahrgastattributinformationen mindestens eines von einem Alter, einem Geschlecht, einer ethnischen Herkunft und einer Größe des Fahrgasts, einem Foto des Fahrgasts, das zum Zeitpunkt der Abholanforderung aufgenommen wurde, einer aktuellen Frisur, einer aktuellen Haarfarbe oder einer Kleidungsbeschreibung des Fahrgasts zum Zeitpunkt der Abholanforderung umfassen und wobei die genauen Fahrgastattributinformationen ein dreidimensionales Modell, 3D-Modell, umfassen, das auf mindestens einem von einem Gesicht, einem Körper und einer Gangart des Fahrgasts basiert.

## Revendications

1. Procédé de mise en œuvre d'un service de ramassage par un véhicule, comprenant :
la réception d'une demande de ramassage par un passager, la demande de ramassage comportant un emplacement approximatif du passager ;
la recherche, à l'aide d'une caméra, du passager après être arrivé à l'emplacement approximatif du passager ;
le ramassage du passager lorsque le passager a été identifié par la caméra à l'aide d'informations générales sur les attributs du passager et est accessible pour le ramassage ;
le ramassage du passager lorsque le passager a été identifié par la caméra à l'aide d'informations détaillées sur les attributs du passager, lorsque le passager est accessible pour le ramassage, et lorsque les informations générales sur les attributs du passager n'ont pas permis d'identifier le passager ; et
la transmission d'un emplacement approximatif du véhicule et des informations d'identification du véhicule au passager lorsque le passager n'a pas été identifié par la caméra à l'aide des informations détaillées sur les attributs du passager, et lorsque le passager a été identifié mais n'est pas accessible pour le ramassage ;
dans lequel les informations générales sur les attributs de passager comprennent au moins l'un parmi l'âge, le genre, la race et la taille du passager, une photographie du passager prise au moment de la demande de ramassage, une coiffure actuelle, une couleur de cheveux actuelle, ou une description des vêtements du passager au moment de la demande de ramassage, et dans lequel les informations détaillées sur les attributs de passager comprennent un modèle tridimensionnel (3D) basé sur au moins l'un parmi un visage, un corps et une démarche du passager.
